(19) **Europäisches Patentamt / European Patent Office / Office européen des brevets**

(11) **EP 2 990 832 A1**

(12) **EUROPEAN PATENT APPLICATION**

(43) Date of publication:
**02.03.2016 Bulletin 2016/09**

(51) Int Cl.:
**G01V 1/24** (2006.01)

(21) Application number: **14306340.2**

(22) Date of filing: **29.08.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicant: **Sercel**<br>**44470 Carquefou (FR)** | (72) Inventor: **Laine, Jérôme**<br>**44880 Sautron (FR)**<br><br>(74) Representative: **L'Helgoualch, Jean et al**<br>**Ipsilon Brema-Loyer**<br>**Le Centralis**<br>**63, avenue du Général Leclerc**<br>**92340 Bourg-la-Reine (FR)** |

(54) **Data acquisition apparatus using one single local clock**

(57)    It is proposed a data acquisition apparatus (1), comprising:
- a receiving antenna (63), receiving a radio communication signal including synchronization information representative of a remote reference clock signal;
- a local clock circuit (8), delivering a local clock signal (CLK);
- a gauging circuit (61), measuring a frequency drift and a phase error of the local clock signal (CLK) in view of the synchronization information;
- an analog-to-digital converter (3), providing a series of digital sampled and dated data according to the local clock signal (CLK); and
- a correcting circuit (4), correcting the series of digital sampled and dated data based at least on the measured frequency drift and phase error.

**Fig.2**

EP 2 990 832 A1

**Description**

## 1. FIELD OF THE INVENTION

The field of the invention is that of data acquisition systems.

More specifically, the invention pertains to a data acquisition apparatus comprising an analog-to-digital converter, the apparatus being intended to form a node of a data acquisition system. All the nodes must be synchronized so that they all have the same sampling time.

The present invention can be applied notably but not exclusively to the field of seismic data acquisition systems.

## 2. TECHNOLOGICAL BACKGROUND

There are numerous data acquisition apparatuses and methods intended to be implemented within a data acquisition system. This is the case for example in the field of seismic data acquisition system. The invention of course is not limited to this particular field of application but is of interest for any technique for data acquisition that has to cope with closely related or similar issues and problems.

Typically, a seismic data acquisition system comprises a network connected to a central unit.

In a first known implementation, the network comprises a plurality of wired acquisition lines. Each wired acquisition line comprises nodes (data acquisition apparatuses) and concentrators, thus all seismic data can be received in the central unit in a real-time manner. The nodes are assembled in series along a telemetry cable and are each associated with at least one seismic sensor (in general, strings of seismic sensors). These nodes process signals transmitted by the seismic sensor(s) and generate data. The concentrators are assembled in series along the telemetry cable and are each associated with at least one of the nodes. Each concentrator receives the data generated by the node(s) with which it is associated. The sensors are either analog sensors or digital sensors. When analog sensors (also referred to as "geophones") are used, they are generally interconnected by cables to form clusters referred to as "strings of geophones". One or several of these strings of geophones (in series or in parallel) are connected to each node (in this case, a node is also referred to as FDU, for "Field Digitizing Unit") and this latter performs an analog to digital conversion of the signal from the groups of geophones and send these data to the central unit. When digital sensors are used (e.g. micro-machined accelerometers, also referred to as "MEMS-based digital accelerometer"), they are integrated in the nodes (in this case, a node is also referred to as DSU, for "Digital Sensor Unit"), which eliminates the geophone strings. Each node integrates one or several digital sensors.

In a second known implementation, the network comprises wireless seismic acquisition units (also referred to as RAU, for "Remote Acquisition Units"). Each wireless seismic acquisition unit is independent and associated with (i.e. is connected to or integrates one or several functions of) one or several of aforesaid nodes. Each wireless seismic acquisition unit communicates wirelessly (directly or through one or several other wireless seismic acquisition units and/or through one or several of aforesaid concentrators) with the central unit and/or with a harvesting device (carried by an operator also referred to as "harvester") if a data harvesting strategy is implemented. The set of wireless seismic acquisition units could constitute a multi-hop wireless mesh network, allowing the wireless seismic acquisition units to exchange data, between them and with the central unit. Thus, each wireless seismic acquisition unit stores its own data (i.e. data obtained from the node(s) with which it is associated) and, eventually, also stores data received from one or several other wireless seismic acquisition units (i.e. data obtained from the node(s) associated with this or these other wireless seismic acquisition units). The sensors are either analog sensors or digital sensors. When analog sensors ("geophones") are used, each wireless seismic acquisition unit integrates for example one or a plurality of aforesaid nodes (as described for the first known implementation with geophones). When digital sensors are used, each wireless seismic acquisition unit is for example connected to a node which integrates one or several digital sensors (as described for the first known implementation with digital sensors).

A classical technical problem related to such data acquisition systems - and especially to wireless data acquisition systems - is to provide all the data acquisition apparatuses (nodes) the same time reference in order to fulfill the accuracy that seismic operations require.

In a first known solution, each node extracts and maintains this sampling reference clock thanks to a phase-locked loop system (PLL) controlling a local oscillator. In this way, the oscillator is slaved to an external time reference that may be provided by a GNSS (Global Navigation Satellite System) receiver for example. The use of a VCXO (voltage controlled crystal oscillator) controlled by a PLL has a high cost and a high energy consumption and involves strong hardware requirements for transmitting the sampling reference clock.

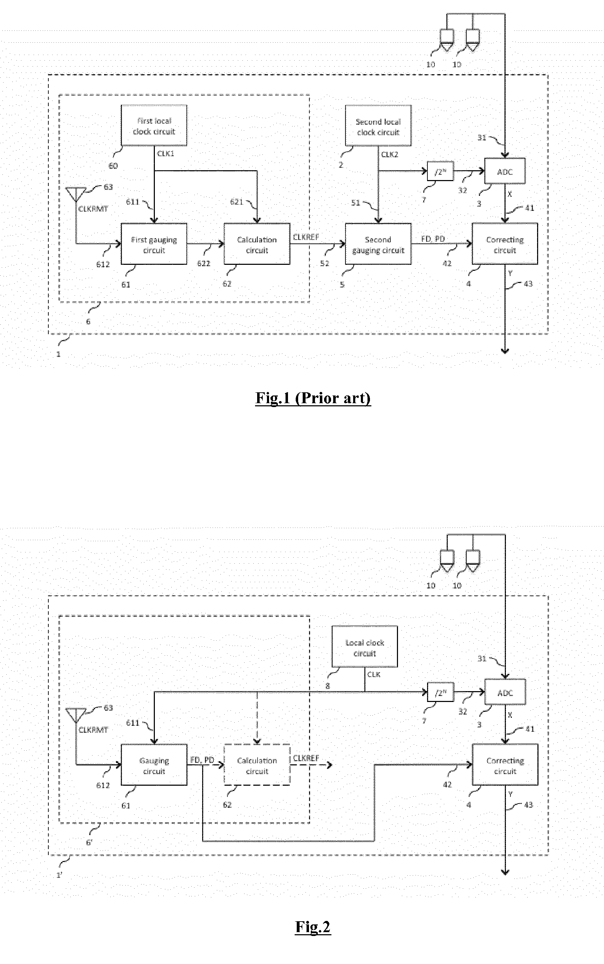

Document U.S. Pat. No. 8,260,580 proposes another data acquisition apparatus to alleviate the above-mentioned inconvenience, making it possible to obtain accurate acquisition data while minimizing energy consumption, computing load and memory load. As presented here below with reference to **figure 1**, such a data acquisition apparatus **1** comprises, in at least one embodiment:

- a receiving circuit **6**, for example a GPS (Global Positioning System) receiver, comprising a first local clock circuit **60**, a first gauging circuit **61**, and a calculation circuit **62**;
- an analog-to-digital converter (ADC) 3;

- a second local clock circuit **2;**
- a second gauging circuit **5;**
- a correcting circuit **4.**

The analog-to-digital converter **3** samples data acquired by at least one sensor **10,** at an imperfect sampling frequency provided by the local clock circuit **2.** The correcting circuit **4** is then used to interpolate sampled data in order to compensate measured frequency drift and phase error of the clock signal CLK2 provided by the local clock circuit **2,** thanks to the information given by the second gauging means **5.** This prior art solution will be presented in greater detail in the detailed description of the present invention.

The inventors have noticed that, in the solution of document U.S. Pat. No. 8,260,580, two local clock circuits and two gauging circuits are used: a first local clock circuit **60** and a first gauging circuit **61,** for generating a reference clock signal CLKREF at the output of the receiving circuit **6;** a second local clock circuit **2,** for sampling the data; and a second gauging circuit **5,** for quantifying the drift of the clock signal CLK2 delivered by the second local clock circuit **2** in view of said reference clock signal CLKREF. Thus, both the data acquisition apparatus and the receiving circuit use their own local clock and their own gauging circuit for measuring frequency drift and phase error of a first input clock signal in view of a second input clock signal (which can be a synchronization information included in a radio communication signal). In other words, while seeking for a solution to further optimize such a data acquisition apparatus, the inventors have identified that some circuits that have the same functional goals (circuit for generating a clock signal, circuit for measuring frequency drift and phase error of a clock signal in view of another clock signal) are redundant. This approach is not efficient, as it leads to an increase of cost and power consumption of the data acquisition apparatus.

## 3. GOALS OF THE INVENTION

The invention, in at least one embodiment, is aimed especially at overcoming these different drawbacks of the prior art.

More specifically, it is a goal of at least one embodiment of the invention to propose a data acquisition apparatus, making it possible to minimize cost and energy consumption.

It is also an aim of at least one embodiment of the invention to propose a data acquisition apparatus of this kind for obtaining more accurate acquisition data.

## 4. SUMMARY OF THE INVENTION

A particular embodiment of the invention proposes a data acquisition apparatus comprising:

- a receiving antenna, receiving a radio communication signal including synchronization information representative of a remote reference clock signal;
- a local clock circuit, delivering a local clock signal (CLK);
- a gauging circuit, measuring a frequency drift and a phase error of said local clock signal (CLK) in view of said synchronization information;
- an analog-to-digital converter, providing a series of digital sampled and dated data according to said local clock signal (CLK);
- a correcting circuit, correcting the series of digital sampled and dated data based at least on the measured frequency drift and phase error.

The general principle is that of:

- using a single local clock signal (CLK) as input for both the gauging circuit and the analog-to-digital converter; and
- using the frequency drift and phase error of the local clock signal (CLK) in view of the synchronization information, as input for the correcting circuit.

In other words, unlike the aforesaid known solution of figure 1, the data acquisition apparatus according to the proposed solution doesn't generate a reference clock signal (CLKREF), but directly use the frequency drift and phase error of the local clock signal (CLK) in view of the synchronization information, as input for the correcting circuit.

Thus, this implementation optimises power consumption and cost of the data acquisition apparatus (compared to the aforesaid known solution of figure 1), since only one local clock circuit is used instead of two in the prior art solution and only one gauging circuit is used instead of two in the prior art solution.

Moreover, higher data accuracy is obtained, since the local clock frequency and phase calibration is done directly in view of the synchronization information included in the radio communication signal received, instead of being done in view of a "local" reference clock being itself generated from a previous local clock frequency and phase calibration.

According to a particular feature, the receiving antenna and the gauging circuit are comprised in a receiving circuit.

Thus the proposed solution is easy to implement since it is possible to use an existing and cheap receiving circuit.

According to a particular feature, the receiving circuit is a RF receiver.

In another embodiment, the receiving circuit is a GNSS receiver.

Thus, the synchronization information included in the radio communication received is reliable, and data accuracy is optimized.

According to a particular feature, the local clock circuit is external to the receiving circuit, and the data acquisition apparatus comprises means for turning off at least partially the receiving circuit once the gauging circuit has measured the frequency drift and phase error.

Thus, the receiving circuit may be turned off for the duration of validity of the gauging, in order to minimize power consumption of the data acquisition apparatus.

In another embodiment, the local clock circuit is internal to the receiving circuit, and the data acquisition apparatus comprises means for turning off at least partially the receiving circuit without turning off the local clock circuit once the gauging circuit has measured the frequency drift and said phase error.

Thus, the receiving circuit may be partially turned off for the duration of validity of the gauging, in order to minimize power consumption of the data acquisition apparatus.

According to a particular feature, the data acquisition apparatus is a seismic data acquisition unit.

In another embodiment, the invention pertains to a data acquisition method carried out by the above-mentioned data acquisition apparatus, and comprising the following steps:

> a) receiving a radio communication signal including synchronization information representative of a remote reference clock signal;
> b) delivering a local clock signal (CLK);
> c) measuring a frequency drift and a phase error of said local clock signal (CLK) in view of said synchronization information;
> d) providing a series of digital sampled and dated data according to said local clock signal (CLK); and
> e) correcting the series of digital sampled and dated data based at least on the measured frequency drift and phase error.

According to a particular feature, the data acquisition method further comprises a step f) of turning off at least partially a receiving circuit, which carries out said steps a) and c), once step c) has been carried out.

In another embodiment, step f) is carried out without turning off a local clock circuit, which is internal to the receiving circuit and generates the local clock signal (CLK).

## 5. LIST OF FIGURES

Other features and advantages of embodiments of the invention shall appear from the following description, given by way of indicative and non-exhaustive examples and from the appended drawings, of which:

- Figure 1, already described with reference to the prior art, shows the simplified structure of a data acquisition apparatus;
- Figure 2 provides a schematic illustration of a data acquisition apparatus according to a first embodiment of the invention;

- Figure 3 is a schematic illustration of a data acquisition apparatus according to a second embodiment of the invention.

## 6. DETAILED DESCRIPTION

In all of the figures of the present document, identical elements and steps are designated by the same numerical reference sign.

Referring now to figure 1 again, we present in greater detail one embodiment of a data acquisition apparatus as described in document U.S. Pat. No. 8,260,580. This data acquisition apparatus **1** is dedicated to the acquisition of seismic analog data measured by at least a sensor **10**. Seismic analog data are sent to an analog data input **31**. The apparatus **1** comprises a local clock circuit **2**, formed for example by a TCXO oscillator (temperature compensated crystal oscillator), and an analog-to-converter **3** for converting the analog data present on the analog data input **31** into first digital data samples X on its converter output. The converter **3** has a frequency input **32** connected to the local clock circuit **2**. The frequency of the digital data samples X generated by the converter **3** is set by the frequency input **32**.

A frequency adapter **7** may be inserted between the local clock circuit **2** and the frequency input **32**, in order to adapt the frequency of the signal CLK2 provided by the local clock circuit **2** to the desired frequency $F_E$ on the frequency input **32**. For example, the frequency adapter **7** may have a frequency divider to divide (e.g. by $2^N$) the frequency $F_2$ of the signal provided by the local clock circuit **2** into frequency $F_E$ on the frequency input **32**, in case frequency $F_E$ is lower than the frequency $F_2$. In an example, the local clock circuit **2** produces a signal having a frequency $F_2$ of several MHz, like 8 Mhz, and $F_E$=256 kHz.

The value of the local clock frequency $F_E$ on input **32** is preset to cause an oversampling of the analog data input **31** by the converter **3**, which is an analog-to-digital sigma-delta converter.

The converter output is connected to the data input **41** of a correcting circuit **4**. The correcting circuit **4** is for example in the form of an interpolation filter. The correcting circuit **4** contains a means to produce on an interpolation output **43** data Y having said sampling frequency $F_E$. The data Y on interpolation output **43** is calculated through an interpolation function of the first one bit data samples **X** of data input **41**. In the correcting circuit **4**, the interpolation function F is calculated for each of the second data Y by a computation means using the frequency drift FD and the phase error PD of the clock signal CLK2 provided by the local clock circuit **2**. The interpolation function F has a preset fixed degree. The correcting circuit **4** may be embodied by a FIR filter.

The frequency drift FD and phase error PD are calculated by a gauging means **5** having a first frequency input **51** connected to the local clock circuit **2** for receiving the imperfect periodic clock signal CLK2 supplied by said local clock circuit **2** having frequency $F_2$, and a second frequency input **52** connected to a reference clock output of a receiving circuit **6** for receiving a periodic reference clock signal CLKREF. In order to optimize costs, this receiving circuit is usually a mass-produced off-the-shelf component, not specifically dedicated to seismic data acquisition field. For example, the receiving circuit **6** supplying a reference clock signal is a satellite-based positioning system, such as a GPS receiver, or a simple RF receiver circuit. The periodic clock signal is represented by pulses or fronts or another signal pattern, called generally periodic time pattern repeating at frequency $F_2$ and able to be detected. The periodic reference clock signal CLKREF is represented by pulses or fronts or another signal pattern, or square signals called generally periodic time pattern repeating at a frequency $F_{REF}$, which may be equal to or different from frequency $F_2$ and which is also able to be detected. The receiving circuit 6 is used as a synchronization source supplying time-stamped signal, which are pulses.

An embodiment of the gauging circuit **5** is described hereunder.

The receiving circuit **6** supplies a reference frequency $F_{REF}$. The gauging circuit 5 measures frequency $F_2$ based on reference frequency $F_{REF}$. For example, in order to measure $F_2$, the number NF of periods of $F_2$ during the time interval defined by a number NFREF of periods of $F_{REF}$ is counted by a counter. Then $F_2$ is obtained by: $F_2 = F_{REF} \cdot NF/NFREF$

Then, the frequency drift FD is obtained based on the measured frequency $F_2$ by

$$FD = (F_2 - F_{2\text{-}SET})/F_{2\text{-}SET}$$

wherein $F_{2\text{-}SET}$ is a fixed and stored setting value of frequency for $F_2$.

FD represents the measured frequency error of the clock signal delivered by the local clock circuit **2**. FD is expressed as a percentage value of actual TCXO frequency compared to typical value. The frequency drift FD is expressed in parts per million (ppm).

The gauging circuit **5** comprises also a means to measure a phase shift representative of the phase error PD of the sampling signal sent to the analog-to-digital converter input **32** with respect to the reference clock signal CLKREF.

Means are provided to compensate the frequency drift FD and the phase error PD in the correcting circuit **4**.

Once the gauging circuit **5** has performed a gauging of the frequency drift FD and phase error PD of the local clock signal, the receiving circuit may be turned off for the duration of validity of the gauging, thanks to appropriate means (not represented on figure 1). This make possible to save energy.

Data Y produced on the interpolation output **43** of the correcting circuit **4** may finally be sent to a decimation filter (not represented on figure 1), to produce final corrected digital data.

An embodiment of the receiving circuit **6** is described hereunder. A classical technique to obtain a reference clock signal in a wireless system is to measure frequency drift and phase error of a local clock signal in view of a synchronization information representative of a remote reference clock signal which is included in a radio communication signal received by a RF receiver. This local clock signal, which is delivered by a local clock circuit formed for example by a TCXO oscillator is then synchronized, based on the measured frequency drift and phase error, resulting in the generation of the reference clock signal. The local clock circuit can be part or not of the receiving circuit.

In some embodiments, the receiving circuit **6** is thus able to receive, by the means of a receiving antenna **63,** a radio communication signal including synchronization information representative of a remote reference clock signal, and comprises a local clock circuit **60,** a gauging circuit **61,** for measuring frequency drift and phase error of the local clock signal delivered by the local clock circuit **60** in view of said synchronization information, and a calculation circuit **62,** able to synchronize said local clock signal based on said frequency drift and phase error. The gauging circuit **61** have a first frequency input **611** connected to the local clock circuit **60** for receiving the first imperfect periodic clock signal CLK1 supplied by said local clock circuit **60,** and a second frequency input **612** for receiving the synchronization information representative of a remote reference clock signal CLKRMT. Frequency drift and phase error on the gauging circuit **61** output are sent to a first input **622** of the calculation circuit **62,** while the imperfect periodic clock signal supplied by the local clock circuit **60** is sent to the second input **621** of the calculation circuit **62.** The calculation circuit synchronizes the imperfect periodic clock signal supplied by the local clock circuit **60,** based on the measured frequency drift and phase error, thus providing a reference clock signal on its output, which is also an output of the receiving circuit.

Referring now to **figure 2,** we present a data acquisition apparatus according to a first embodiment of the invention. This data acquisition apparatus incorporates some of the principles of operation previously described in figure 1, in particular using a correcting circuit to correct data sampled at an imperfect frequency delivered by a local clock circuit, based on the frequency drift and phase error of the local clock signal measured by a gauging circuit in view of a reference clock signal. But when the data acquisition apparatus according to prior art needs two local clock circuits and two gauging circuits, the data acquisition apparatus described hereunder needs only one local clock circuit and one gauging circuit.

As presented in greater detail here below, the data acquisition apparatus **1'** is dedicated to the acquisition of analog data measured by at least a sensor **10.**

Data may be seismic data, or another type. Examples of analog sensors are geophones, translation sensors, velocimeters, accelerometers, pressure sensors. Unlike the aforesaid known solution of figure 1, the data acquisition apparatus according to the proposed solution needs only one local clock circuit and one gauging circuit. The use of a single local clock circuit is made possible by the fact that the receiving circuit has means, for example sigma-delta fractional PLL (Phase-Locked Loop), for adapting any clock signal frequency (or at least wide range of frequencies) applied to its clock signal input to its desired operating frequency. Examples of receiving circuit are RF receiver or GNSS receiver (e.g. GPS receiver). The gauging circuit input **611** and the converter input **32** are now connected to the same single local clock circuit **8,** instead of using the two local clock circuits numbered **2** and **60** on figure 1. Cost and power consumption are thus reduced compared to the solution of the prior art. This local clock circuit **8** is formed for example by a local oscillator such as a simple crystal oscillator, a TCXO oscillator (temperature compensated crystal oscillator) or a OCXO oscillator (oven-controlled crystal oscillator). The receiving circuit **6'** includes its own gauging circuit **61,** which delivers frequency drift and phase error of the local clock signal CLK in view of the synchronization information included in the radio communication signal received trough the receiving antenna **63**. These frequency drift and phase error information are sent directly to the correcting circuit **4,** to be used to correct the series of the digital sampled and dated data X. In other words, there is no need for the second gauging circuit 5 for measuring a frequency drift and a phase error of the local clock signal in view of a reference clock signal, since this functionality is already achieved by the means of the gauging circuit **61** of the receiving circuit **6',** the synchronization information CLKRMT included in the radio communication signal being the reference clock. That means that the calculation circuit **62** of the receiving circuit **6'** is not used anymore in the scope of the data acquisition apparatus according to this particular embodiment.

As already described in prior art solution, a frequency adapter **7** may be inserted between the local clock circuit **8** and the frequency input **32,** in order to adapt the frequency of the signal CLK provided by the local clock circuit **8** to the desired frequency $F_E$ on the frequency input **32** of the converter. In other embodiments of this invention, this frequency adapter **7** may be inserted upstream, immediately at the local clock circuit output, in order to adapt the frequency of the signal CLK provided by the local clock circuit **8** to the same desired frequency on the frequency inputs **611** and **32.**

The embodiment presented in figure 2 shows a local clock circuit **8,** which is external to the receiving circuit **6'**. As already described in prior art solution, the data acquisition apparatus comprises means (not represented) for turning off at least partially the receiving circuit **6',** once the gauging circuit **61** has performed a gauging of the frequency drift FD and phase error PD of the local clock signal CLK. The receiving circuit **6'** then stays turned off for the duration of validity of the gauging, thus making it possible to save energy. Before this duration of validity has elapsed, the receiving circuit is turned on and the gauging circuit **61** can then perform a new gauging.

In an alternative implementation, the local clock circuit **8** is internal to the receiving circuit **6',** but has its own power supply circuit. Therefore, it is still possible for the data acquisition apparatus to turn off at least partially the receiving circuit **6'** without turning off the local clock circuit **8.**

In the embodiment described in figure 2, the receiving circuit is thus cleverly used for other purpose than its primary function. When a person skilled in the art would only use such a mass-produced off-the-shelf component for its well-known ability to provide a reference clock signal, the inventors had the idea of diverted this component from its intended use: they used it as a gauging means, by collecting internal data (frequency drift and phase error of the local clock signal) usually considered as simple intermediate data computed within the component, as a necessary step performed among others in order to fulfil more important functions.

This new approach has several advantages: since there is no use anymore for a specific second gauging circuit for measuring a second frequency drift and a second phase error of the local clock signal - the gauging circuit **61** already available in the receiver circuit **6'** being used - cost and power consumption are reduced. Moreover, higher accuracy is obtained, since the local clock frequency and phase calibration is done directly in view of the synchronization information included in the radio communication signal received, instead of being done it in view of a reference clock, said reference clock being itself generated from a previous local clock frequency and phase calibration.

According to the embodiment described in figure 2, the receiving circuit **6'** still comprises a calculation circuit **62,** even if this calculation circuit does not participate in implementing the technique proposed to obtain accurate acquisition data while minimizing energy consumption, computing load and memory load. Indeed, the reference clock CLKREF stays available if required to perform any other function within the data acquisition apparatus. According to an alternative embodiment, the receiving circuit does not comprise the calculation circuit anymore. To some extend, the receiving circuit is reduced to the minimum necessary to implement the previously described technique. The receiving circuit is then not necessary an off-the-shelf component anymore, but can be reduced to a simple combination of a receiving antenna - receiving a radio communication signal including synchronization information representative of a remote reference clock signal - in association with a gauging circuit, for measuring a frequency drift and a phase error of a local clock signal in view of this synchronization information.

According to another embodiment, the receiving antenna **63** and the gauging circuit **61** are not encapsulated in a receiving circuit **6** anymore.

## Claims

1. A data acquisition apparatus (1), comprising:

   - a receiving antenna (63), receiving a radio communication signal including synchronization information representative of a remote reference clock signal;
   - a local clock circuit (8), delivering a local clock signal (CLK);
   - a gauging circuit (61), measuring a frequency drift and a phase error of said local clock signal (CLK) in view of said synchronization information;
   - an analog-to-digital converter (3), providing a series of digital sampled and dated data according to said local clock signal (CLK);
   - a correcting circuit (4), correcting the series of digital sampled and dated data based at least on the measured frequency drift and phase error.

2. The data acquisition apparatus according to claim 1, wherein the receiving antenna (63) and the gauging circuit (61) are comprised in a receiving circuit (6).

3. The data acquisition apparatus according to claim 2, wherein said receiving circuit (6) is a RF receiver.

4. The data acquisition apparatus according to claim 2, wherein said receiving circuit (6) is a GNSS receiver.

5. The data acquisition apparatus according to anyone of the claims 2 to 4, wherein said local clock circuit (8) is external to the receiving circuit (6), and wherein the data acquisition apparatus comprises means for turning off at least partially the receiving circuit (6) once the gauging circuit (61) has measured said frequency drift and said phase error.

6. The data acquisition apparatus according to anyone of the claims 2 to 4, wherein said local clock circuit (8) is internal to the receiving circuit (6), and wherein the data acquisition apparatus comprises means for turning off at least partially the receiving circuit (6) without turning off the local clock circuit (8) once the gauging circuit has measured said frequency drift and said phase error.

7. The data acquisition apparatus according to anyone of the claims 1 to 6, wherein said apparatus is a seismic data acquisition unit.

8. A data acquisition method **characterized in that** a data acquisition apparatus (1) performs the following steps:

   a) receiving a radio communication signal including synchronization information representative of a remote reference clock signal;
   b) delivering a local clock signal (CLK);
   c) measuring a frequency drift and a phase error of said local clock signal (CLK) in view of said synchronization information;
   d) providing a series of digital sampled and dated data according to said local clock signal (CLK); and
   e) correcting the series of digital sampled and dated data based at least on the measured frequency drift and phase error.

9. The data acquisition method according to claim 8 comprising a step f) of turning off at least partially a receiving circuit (6), which carries out said steps a) and c), once step c) has been carried out.

10. The data acquisition method according to claim 9 wherein said step f) is carried out without turning off a local clock circuit (8), which is internal to the receiving circuit (6) and generates said local clock signal (CLK).

**Fig.1 (Prior art)**

**Fig.2**

Europäisches
Patentamt

European
Patent Office

Office européen
des brevets

# EUROPEAN SEARCH REPORT

Application Number

EP 14 30 6340

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X,D | US 8 260 580 B2 (LAINE JEROME [FR]) 4 September 2012 (2012-09-04) * column 1, line 57 - column 2, line 22 * * column 5, line 35 - line 48 * * column 7, line 17 - column 8, line 50; claim 1 * | 1-10 | INV. G01V1/24 |
| X | US 2008/170469 A1 (PHILLIPS ALAN R [CA] ET AL) 17 July 2008 (2008-07-17) * paragraph [0030] * * paragraphs [0039] - [0044], [0053], [0058], [0061] * | 1,9 | |
| X | US 2007/025484 A1 (LAINE JEROME [FR] ET AL) 1 February 2007 (2007-02-01) * paragraph [0012] - paragraph [0018] * * paragraphs [0024], [0044]; figure 2 * | 1,9 | |
| A | US 2008/219094 A1 (BARAKAT SIMON [FR] BARAKAT SIMON [FR] ET AL) 11 September 2008 (2008-09-11) * paragraph [0012] - paragraphs [0014], [0027], [0052] - [0054] * * paragraphs [0061], [0066]; claim 1 * | 1,9 | |
| A | US 2013/038358 A1 (COOK DAVID M [US] ET AL) 14 February 2013 (2013-02-14) * paragraphs [0028], [0029]; claims 1,11 * | 1,9 | TECHNICAL FIELDS SEARCHED     (IPC) G01V H04J H04W |
| A | US 2009/080290 A1 (RAY CLIFFORD H [US] ET AL) 26 March 2009 (2009-03-26) * abstract * | 1,9 | |
| A | US 2011/158047 A1 (BEFFA MIHAI [US] ET AL) 30 June 2011 (2011-06-30) * abstract * | 1,9 | |

The present search report has been drawn up for all claims

| Place of search | Date of completion of the search | Examiner |
|---|---|---|
| The Hague | 16 February 2015 | Lorne, Benoît |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 30 6340

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2015

| Patent document cited in search report | | Publication date | Patent family member(s) | | Publication date |
|---|---|---|---|---|---|
| US 8260580 | B2 | 04-09-2012 | CA | 2691160 A1 | 03-08-2010 |
| | | | CN | 101826873 A | 08-09-2010 |
| | | | EP | 2214034 A1 | 04-08-2010 |
| | | | US | 2010198561 A1 | 05-08-2010 |
| US 2008170469 | A1 | 17-07-2008 | NONE | | |
| US 2007025484 | A1 | 01-02-2007 | CA | 2553495 A1 | 28-01-2007 |
| | | | CN | 1904642 A | 31-01-2007 |
| | | | FR | 2889331 A1 | 02-02-2007 |
| | | | GB | 2428799 A | 07-02-2007 |
| | | | US | 2007025484 A1 | 01-02-2007 |
| US 2008219094 | A1 | 11-09-2008 | CN | 101669043 A | 10-03-2010 |
| | | | EP | 2130064 A2 | 09-12-2009 |
| | | | US | 2008219094 A1 | 11-09-2008 |
| | | | US | 2010074054 A1 | 25-03-2010 |
| | | | US | 2014010047 A1 | 09-01-2014 |
| | | | WO | 2008147584 A2 | 04-12-2008 |
| US 2013038358 | A1 | 14-02-2013 | NONE | | |
| US 2009080290 | A1 | 26-03-2009 | CN | 101836132 A | 15-09-2010 |
| | | | EP | 2198325 A2 | 23-06-2010 |
| | | | RU | 2010115753 A | 27-10-2011 |
| | | | US | 2009080290 A1 | 26-03-2009 |
| | | | US | 2011032798 A1 | 10-02-2011 |
| | | | US | 2014086010 A1 | 27-03-2014 |
| | | | WO | 2009066144 A2 | 28-05-2009 |
| US 2011158047 | A1 | 30-06-2011 | AU | 2010339468 A1 | 19-07-2012 |
| | | | CA | 2785539 A1 | 07-07-2011 |
| | | | CN | 102804879 A | 28-11-2012 |
| | | | CO | 6571901 A2 | 30-11-2012 |
| | | | EA | 201290580 A1 | 30-01-2013 |
| | | | EP | 2520124 A2 | 07-11-2012 |
| | | | US | 2011158047 A1 | 30-06-2011 |
| | | | US | 2013135968 A1 | 30-05-2013 |
| | | | WO | 2011082297 A2 | 07-07-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8260580 B